# EUROPEAN PATENT APPLICATION

(11) **EP 2 749 786 A2**
(43) Date of publication of application: **02.07.2014**
(21) Application number: 13199723.1
(22) Date of filing: 27.12.2013
(51) Int. Cl.: F16F 9/20, F16F 9/32

(54) **Shock absorber**

(30) Priority: 27.12.2012 JP 2012284379
(71) Applicant: Yamaha Motor Hydraulic System Kabushiki Kaisha, Shuchi-gun, Shizuoka 437-0223 (JP)
(72) Inventor: Ito, Keisuke, Shuchi-gun, Shizuoka 437-0223 (JP)
(74) Representative: Hersina, Günter

(57) **Abstract**

A shock absorber includes a cylinder part (11), a piston rod part (12) configured as a single member, a pair of protruding members (13A, 13B) protruding from an outer circumferential surface of the piston rod part (12), and a piston valve assembly (A1) having the piston rod part (12) passing therethrough. The piston valve assembly (A1) includes a piston part (15), a valve element (16), and a threaded part (17) configured to extend or contract in an axial direction (X) as a result of rotation of a female thread portion (172) relative to a male thread portion (171). The piston valve assembly (A1) is configured such that the piston part (15) and the valve element (16) are retained to the piston rod part (12) not to move with respect to the axial direction (X) of the piston rod part (12) by a stretching force (F1) generated between the pair of protruding members (13A, 13B) due to extension of the threaded part (17). This facilitates disassembling or assembling operations such as rearrangement of plate members (161) and ensures a high degree of consistency of the axis line of a piston rod part (12) at opposite sides of a piston part (15) so that a stable generation of a damping force is achieved.

## Description

### TECHNICAL FIELD

The present invention relates to a shock absorber.

### BACKGROUND ART

Japanese Patent Application Laid-Open No. 2004-293720 (JP 2004-293720 A) discloses a shock absorber including a double rod cylinder. The shock absorber disclosed in JP 2004-293720 A includes a cylinder, a piston, and a pair of piston rods. The piston, which is provided in the cylinder, partitions the interior of the cylinder into two oil chambers. A damping valve is provided to the piston. The damping valve allows communication between the two oil chambers. The piston rods are arranged on opposite surfaces of the piston. One piston rod extends from the piston in the axial direction of the cylinder, and protrudes out of the cylinder through an opening provided at one end of the cylinder. The other piston rod extends in the direction opposite to the direction of extension of the one piston rod. Similarly to the one piston rod, the other piston rod protrudes out of the cylinder through an opening provided at the other end of the cylinder. A sealing member and a bearing member are provided between each of the piston rods and each of the openings of the cylinder. The piston rods are movable in the axial direction of the cylinder while the interior of the cylinder is kept sealed.

In the shock absorber of JP 2004-293720 A, as the one piston rod moves into the cylinder, the other piston rod moves out of the cylinder. In this configuration, it is not necessary to compensate for a volume change in the cylinder caused by forward or backward movement of the piston rod. Therefore, the shock absorber of JP 2004-293720 A does not need a reservoir, which would be necessary in a shock absorber including a single rod cylinder. Thus, there is no risk of occurrence of aeration. Moreover, in the shock absorber of JP 2004-293720 A, a change in the amount of hydraulic oil contained in the oil chamber of the cylinder is small.

In a shock absorber including a double rod cylinder, when the position of a piston rod is radially shifted from a reference position which is set in the cylinder, a frictional force caused during extension or compression of a shock absorber significantly increases. Therefore, it is demanded that the accuracy of the position of a cylinder rod relative to the cylinder be increased. However, it is not easy that a pair of piston rods, which are separate members, are coupled to each other with their axis lines being coincident, as pointed out in JP 2004-293720 A. Herein, the degree of coincidence between the axis lines means the degree to which axis lines corresponding to portions of the piston rods are aligned on the same straight line.

In the shock absorber of JP 2004-293720 A, the degree of coincidence between the axis lines of the pair of piston rods is purposely ignored. In a double rod damper of JP 2004-293720 A, a proximal end of one of the pair of piston rods is fixedly coupled to the piston, and a proximal end of the other piston rod is coupled to the piston while being separated from the piston. To be specific, the proximal end of the other piston rod is coupled to the piston in such a manner that a radial movement of the other piston rod is allowed.

In more detail, in JP 2004-293720 A, the proximal end of the other piston rod is received in a holder member that is fixed to an end of the piston. A flange-shaped stopper ring is attached to an outer periphery of the proximal end. A snap ring is attached to the holder member, and a spacer ring is interposed between the stopper ring and the snap ring. The stopper ring is hooked to the snap ring with interposition of the spacer ring, and thereby the other piston rod is retained against pulling out of the holder member. Pressure that is directed outward of the holder member is applied to the proximal end received in the holder member by means of a spring. Accordingly, the other piston rod is not fixed to the piston, and allowed to move in a radial direction. In the technique of JP 2004-293720 A, the pair of rods are not fixed to each other, to cause the cylinder to self-adjust the positions of the pair of piston rods.

In the shock absorber of JP 2004-293720 A, a plurality of plate members that define a damping valve are provided between the piston and the holder member. As a piston nut is tightened, the holder member moves toward the piston side. As a result, the plurality of plate members are fixed between the piston and the holder member. This can relatively facilitate disassembling or assembling operations, such as rearrangement of the plate members.

### SUMMARY OF THE INVENTION

An object of the invention is to provide a shock absorber that is configured such that disassembling or assembling operations such as rearrangement of plate members can be easily performed, and such that the degree of coincidence between axis lines of piston rods arranged at opposite sides of a piston is high so that a stable damping force can be generated.

This object is achieved by a shock absorber according to claim 1.

In the shock absorber of JP 2004-293 720 A, however, a structure to couple the piston rods is complicated, and there is a concern that the piston rod might not be maintained in such a manner that its radial movement is allowed if a load is applied to a region between the piston and the piston rod. Additionally, there is a problem that it is difficult to obtain an advantageous effect of improved operability (smoothness of a load change in the course of displacement of the piston) when the pair of piston rods, which are not fixed to each other, are deviated from each other in the radial direction.

Thus, a shock absorber including a double rod cylinder is advantageous in that using of a pair of piston rods that are separate members makes it easy to perform disassembling or assembling operations such as rearrangement of plate members. However, in the shock absorber including the double rod cylinder, using a pair of piston rods makes it necessary that the pair of piston rods are fastened to each other with interposition of a component arranged near the piston. This inevitably makes it less easy to enhance the degree of coincidence between axis lines of the pair of piston rods. That is, it has been conventionally difficult to achieve both facilitation of disassembling or assembling operations such as rearrangement of plate members and ensuring of the degree of coincidence between axis lines of piston rods.

### MEANS FOR SOLVING THE PROBLEMS

To solve the problems described above, the present invention adopts the following configurations.
(1) A shock absorber including:
   a cylinder part having a cylindrical shape;
   a piston rod part arranged in the cylinder part, the piston rod part being configured as a single member;
   a pair of protruding members protruding from an outer circumferential surface of the piston rod part, the pair of protruding members being spaced apart from each other with respect to an axial direction of the piston rod part; and
   a piston valve assembly having the piston rod part passing therethrough, the piston valve assembly being in abutting contact with the pair of protruding members, the abutting contact occurring in a direction from an inside toward an outside of a space between the pair of protruding members with respect to the axial direction of the piston rod part,
   the piston valve assembly including:
      a piston part having the piston rod part passing therethrough, the piston part being arranged to partition an interior of the cylinder part into two regions;
      a valve element including one or a plurality of plate members, the valve element being adjacent to the piston part with respect to the axial direction of the piston rod part, the valve element being arranged to be displaceable or deformable so that a working-fluid passage that allows communication between the two regions is opened; and
      a threaded part having the piston rod part passing therethrough, the threaded part including a male thread portion and a female thread portion that are fitted with each other while being opposed to each other with respect to a radial direction of the piston rod part, the threaded part being arranged to extend or contract in the axial direction of the piston rod part as a result of rotation of the female thread portion relative to the male thread portion,
   the piston valve assembly being arranged such that the piston part and the valve element do not move relative to the piston rod part with respect to the axial direction of the piston rod part by a stretching force that is generated between the pair of protruding members due to extension of the threaded part.

In a configuration of (1), the piston rod part arranged as a single member penetrates through the piston part. This ensures a sufficient degree of consistency of the axis line of the piston rod part at opposite sides of the piston part. As a result, a good operability is obtained. A sufficient strength of the piston rod part as a whole is also ensured. The degree of consistency of the axis line of the piston rod part means the degree to which axis lines corresponding to portions of the piston rod part are aligned on the same straight line. In the configuration of (1), rotation of the female thread portion and the male thread portion relative to each other causes the threaded part to extend. As a result, a stretching force is generated between the pair of protruding members, so that the piston part and the valve element are retained to the piston rod part so as not to move with respect to the axial direction of the piston rod part. Accordingly, the configuration of (1) can facilitate disassembling or assembling operations such as rearrangement of plate members. A screw thread used for retention is provided in the threaded part (the male thread portion and the female thread portion), and not in the piston rod part. Therefore, in the configuration of (1), deformation caused by threading does not occur in the piston rod part. This suppresses a decrease in the degree of consistency of the axis line of the piston rod part at opposite sides of the piston part.

Accordingly, the configuration of (1) can facilitate the disassembling or assembling operations such as rearrangement of plate members, and can ensure a high degree of consistency of the axis line of the piston rod part at opposite sides of the piston part. Thus, a stable generation of a damping force is enabled.
(2) The shock absorber according to (1), wherein
   the threaded part is supported on the piston rod part in a freely rotatable manner.
   In a process of assembling the shock absorber of (2), an operation of rotating the male thread portion and the female thread portion relative to each other is performed to extend the threaded part. This causes a shift from a state where the stretching force is not generated to a state where the stretching force is generated. In a configuration of (2), the male thread portion and the female thread portion are not fixed to the piston rod part with respect to a rotation direction. Accordingly, in the configuration of (2), a force traveling in the rotation direction, which is caused by the operation performed on the male thread portion and the female thread portion, is less likely to be transmitted to the piston rod part. Therefore, deformation of the piston rod part in the assembling process is effectively suppressed. Thus, the degree of consistency of the axis line of the piston rod part at opposite sides of the piston part is further increased.
(3) The shock absorber according to (1) or (2), wherein
   the threaded part includes a first exposed portion and a second exposed portion, the first exposed portion being integral with the male thread portion and exposed radially outside of the piston rod part, the second exposed portion being integral with the female thread portion and exposed radially outside of the piston rod part.
   In a configuration of (3), both the first exposed portion and the second exposed portion that are exposed radially outside of the piston rod part can be held for the rotation of the male thread portion and the female thread portion relative to each other, to thereby retain the piston part and the valve element to the piston rod part. Accordingly, the assembling operation can be easily performed.
(4) The shock absorber according to any one of (1) to (3), wherein
   the shock absorber includes a biasing element that is arranged to apply a force to the piston valve assembly, the force traveling in a direction from the outside toward the inside of the space between the pair of protruding members with respect to the axial direction of the piston rod part,
   a contact surface is provided at one end of the piston valve assembly with respect to the axial direction of the piston rod part, the contact surface being in contact with the biasing element,
   the contact surface includes an accommodating recess that is concave in the direction from the outside toward the inside of the space between the pair of protruding members with respect to the axial direction of the piston rod part,
   one of the pair of protruding members is at least partially accommodated in the accommodating recess.
   In a configuration of (4), the accommodating recess is provided in the contact surface that is in contact with the biasing element. The protruding member is at least partially accommodated in the accommodating recess. Therefore, the extent to which the protruding member protrudes from the contact surface is reduced. This can stabilize the posture of the biasing element being in contact with the contact surface. As a result, the stability in generating the damping force is improved.
(5) The shock absorber according to (4), wherein
   the biasing element is in contact with the contact surface but not in contact with the pair of protruding members.
   In a configuration of (5), the protruding member and the biasing element do not interfere with each other. Therefore, the posture of the biasing element being in contact with the contact surface can be further stabilized. As a result, the stability in generating the damping force is further improved.
(6) The shock absorber according to any one of (1) to (5), wherein
   the piston valve assembly is arranged such that the threaded part is extended to generate the stretching force between the pair of protruding members under a state in which at least the male thread portion and the female thread portion are positioned between the pair of protruding members with respect to the axial direction of the piston rod part.
   In a configuration of (6), the threaded part is extended between the pair of protruding members. This enables an efficient generation of the stretching force. Accordingly, the piston part and the valve element can be more firmly retained to the piston rod part.
(7) The shock absorber according to (6), wherein
   the piston valve assembly is arranged such that the threaded part is extended to generate the stretching force between the pair of protruding members under a state in which at least the male thread portion and the female thread portion are in contact with an outer circumferential surface of a portion of the piston rod part located between the pair of protruding members.
   In a configuration of (7), the threaded part is extended under a state where the male thread portion and the female thread portion are positioned on a line segment that connects the pair of protruding members to each other. This enables a more efficient generation of the stretching force. Accordingly, the piston part and the valve element can be more firmly retained to the piston rod part.
(8) The shock absorber according to any one of (1) to (7), wherein
   the piston part, the valve element, and the threaded part are separate members that are not fixed to one another, and are arranged between the pair of protruding members with respect to the axial direction of the piston rod part,
   the piston valve assembly is arranged such that the piston part and the valve element do not move relative to the piston rod part with respect to the axial direction of the piston rod part by the stretching force acting on the piston part, the valve element, and the threaded part due to extension of the threaded part.
   In a configuration of (8), it is not necessary that the piston part, the valve element, and the threaded part, which are separate members, are fixed to one another in advance in a process of manufacturing the shock absorber. Accordingly, the process of manufacturing the shock absorber can be simplified.
(9) The shock absorber according to any one of (1) to (7), wherein
   the piston part, the valve element, and the threaded part are separate members,
   the piston part and the valve element are retained to the threaded part so as not to move with respect to the axial direction of the piston rod part,
   the piston valve assembly is arranged such that the piston part and the valve element do not move relative to the piston rod part with respect to the axial direction of the piston rod part by the stretching force acting on the threaded part due to extension of the threaded part.

In a configuration of (9), in the process of manufacturing the shock absorber, the piston part and the valve element are retained to the threaded part so that a sub assembly is formed in advance before the piston part, the valve element, and the threaded part are attached to the piston rod part. This provides easy handling of the piston part, the valve element, and the threaded part during attaching of the piston part, the valve element, and the threaded part to the piston rod part.

### EFFECTS OF THE INVENTION

The present invention facilitates disassembling or assembling operations such as rearrangement of plate members, and ensures a high degree of consistency of the axis line of a piston rod part at opposite sides of a piston so that a stable generation of a damping force is achieved.

These and other objects, features, aspects and advantages of the present invention will become more apparent from the following detailed description, which, taken in conjunction with the accompanying drawings, discloses some embodiments of the present invention.

### BRIEF DESCRIPTION OF THE DRAWINGS

FIG. 1 is a cross-sectional view schematically showing a principal part of a shock absorber according to a first embodiment of the present invention.
FIG. 2 is a cross-sectional view schematically showing a principal part of a shock absorber according to a second embodiment of the present invention.
FIG. 3 is a cross-sectional view showing a piston valve assembly included in the shock absorber shown in FIG. 2.

### EMBODIMENTS FOR CARRYING OUT THE INVENTION

### < First Embodiment of the Present Invention>

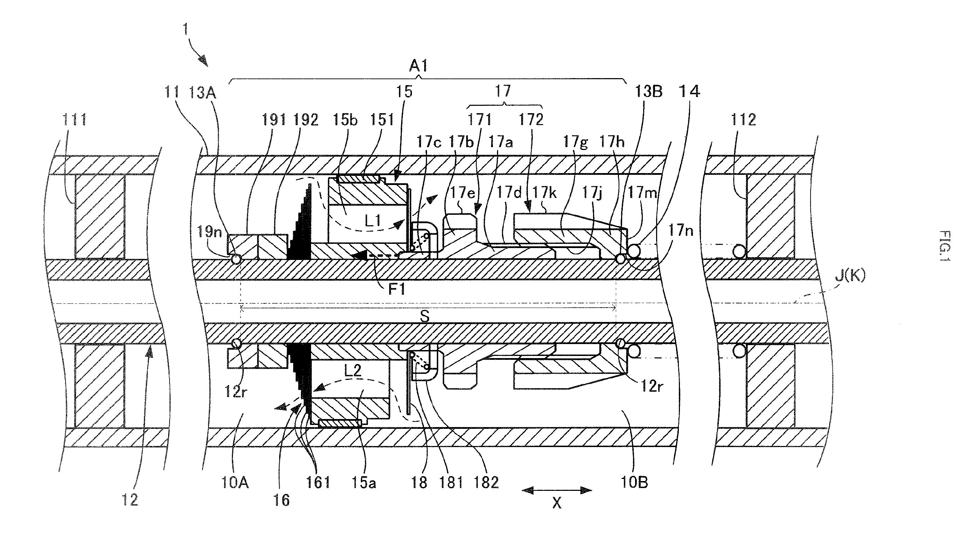

FIG. 1 is a cross-sectional view schematically showing a principal part of a shock absorber according to a first embodiment of the present invention. A shock absorber 1 shown in FIG. 1 is, for example, provided in a vehicle, and damps vibrations caused in the vehicle. The shock absorber 1 is provided in a motorcycle, for example. The shock absorber of the present invention may be provided in an automobile or the like.

The shock absorber 1 includes a cylinder part 11, a piston rod part 12, a pair of fixing clips 13A, 13B, and a piston valve assembly A1. The pair of fixing clips 13A, 13B are shown as one example of a pair of protruding members of the present invention.

The cylinder part 11 has a cylindrical shape. An axis line K of the cylinder part 11 is shown in the center of FIG. 1. A pair of closures 111, 112 to close openings of the cylinder part 11 are provided at both ends of the cylinder part 11. Hydraulic oil serving as a working fluid is loaded in the cylinder part 11.

The piston rod part 12 is arranged in the cylinder part 11. The piston rod part 12 is a rod-shaped member extending along the axis line K of the cylinder part 11. The piston rod part 12 is provided as a single member. No screw thread is provided on an outer circumferential surface of the piston rod part 12. In FIG. 1, an axis line J of the piston rod part 12 and the axis line K of the cylinder part 11 are indicated by the same dot-dash line. In the shock absorber 1, a direction in which the axis line of the piston rod part 12 extends will be referred to as an axial direction X. The piston rod part 12 is arranged to be guided by the pair of closures 111, 112 and slide in the axial direction X relative to the cylinder part 11.

The fixing clips 13A, 13B are positioned at a distance from each other with respect to the axial direction X of the piston rod part 12, and protrude from the outer circumferential surface of the piston rod part 12. More specifically, the outer circumferential surface of the piston rod part 12 includes a pair of recesses 12r in which the fixing clips 13A, 13B are to be mounted. Each of the pair of recesses 12r is a groove circularly formed in the outer circumferential surface of the piston rod part 12. The pair of recesses 12r are positioned at a distance from each other with respect to the axial direction X. Each of the fixing clips 13A, 13B is a C-shaped ring. The fixing clips 13A, 13B are fitted into the pair of recesses 12r formed in the piston rod part 12, respectively. In this configuration, the fixing clips 13A, 13B protrude radially outward of the piston rod part 12 from the outer circumferential surface of the piston rod part 12.

### [Piston Valve Assembly]

The piston valve assembly A1 is arranged in the cylinder part 11. The piston rod part 12 penetrates through the piston valve assembly A1. The piston valve assembly A1 is in abutting contact with the fixing clips 13A, 13B. The abutting contact occurs in a direction from the inside toward the outside of a space S between the pair of fixing clips 13A, 13B with respect to the axial direction X of the piston rod part 12.

The piston valve assembly A1 includes a piston part 15, a damping valve element 16, and a threaded part 17. The piston part 15, the damping valve element 16, and the threaded part 17 are separate members.

The piston rod part 12 penetrates through the piston part 15. Thus, the piston rod part 12 penetrates through the piston valve assembly A1 including the piston part 15, and also penetrates through the pair of closures 111, 112 provided in the cylinder part 11.

The piston part 15 partitions the interior of the cylinder into two hydraulic oil chambers 10A, 10B. The two hydraulic oil chambers 10A, 10B are shown as one example of the two regions of the present invention. The piston part 15 includes fluid passages 15a, 15b through which the hydraulic oil flows. Each of the fluid passages 15a, 15b is arranged as a through hole extending through the piston part 15. The fluid passages 15a, 15b allow the two hydraulic oil chambers 10A, 10B to communicate with each other. The fluid passages 15a, 15b (through holes) penetrate through the piston part 15 in the axial direction X of the piston rod part 12. The piston part 15 includes, on an outer circumferential surface thereof, a packing 151 (piston ring) that is in contact with an inner surface of the cylinder part 11. In another adoptable structure of the piston part 15, the packing 151 may not be provided so that the piston part 15 can be in direct contact with the inner surface of the cylinder part 11. The fluid passages 15a, 15b may be arranged as grooves provided in the outer circumferential surface instead of through holes.

The damping valve element 16 is adjacent to the piston part 15 with respect to the axial direction X. The damping valve element 16 is one example of the valve element of the present invention. The damping valve element 16 is positioned such that the damping valve element 16 closes an opening of the fluid passage 15a provided in the piston part 15. The damping valve element 16 includes a plurality of plates (shims) 161 through which the piston rod part 12 penetrates. The plurality of shims 161 are stacked. When the damping valve element 16 deforms, a hydraulic-oil fluid passage including the fluid passage 15a is opened. A flow resistance of the hydraulic oil flowing through the fluid passage 15a is based on the size of the aperture of the damping valve element 16. The size of the aperture of the damping valve element 16 is based on the number of the shims 161. Therefore, the performance of the damping valve element 16, which determines a damping force of the shock absorber 1, is adjustable by the number of the shims 161. Depending on a result of adjustment of the performance, the number of the shims 161 included in the damping valve element 16 may be different from that shown in FIG. 1. The number of the shims 161 may be one. The thickness of the damping valve element 16, that is, the dimension of the damping valve element 16 with respect to the axial direction X, changes in accordance with the number of the shims 161. The shim 161 is one example of the plate member of the present invention.

The threaded part 17 includes a male thread member 171 and a female thread member 172. The male thread member 171 is one example of the male thread part of the present invention, and the female thread member 172 is one example of the female thread part of the present invention. Each of the male thread member 171 and the female thread member 172 is a cylindrical member through which the piston rod part 12 penetrates.

A screw thread 17d is provided in an outer circumferential surface of the male thread member 171. A screw thread 17j is provided in an inner circumferential surface of the female thread member 172. The shape of the screw thread 17j corresponds to the shape of the screw thread 17d. The male thread member 171 and the female thread member 172 are opposed to each other with respect to the radial direction of the piston rod part 12, and in such a state, are fitted with each other. The screw thread 17d and the screw thread 17j are screwed to each other. The screw thread 17d and the screw thread 17j are not in contact with an outer circumferential surface of the piston rod part 12. The male thread member 171 and the female thread member 172 are positioned between the fixing clips 13A, 13B with respect to the axial direction X of the piston rod part 12. The male thread member 171 and the female thread member 172 are in contact with the outer circumferential surface of the piston rod part 12.

When the female thread member 172 rotates relative to the male thread member 171, the threaded part 17 extends or contracts in the axial direction X of the piston rod part 12. The extension of the threaded part 17 generates a stretching force F1 between the pair of fixing clips 13A, 13B. The generated stretching force F1 causes the piston part 15, the damping valve element 16 and the threaded part 17 to be retained to the piston rod part 12 so as not to move with respect to the axial direction X. In this state, the piston valve assembly A1 is retained to the piston rod part 12 so as not to move with respect to the axial direction X.

To be more specific, the male thread member 171 includes a threaded portion 17a, an operation portion 17b, and a contact portion 17c. The operation portion 17b is one example of the first exposed portion of the present invention. The threaded portion 17a, the operation portion 17b, and the contact portion 17c are integral with the male thread member 171. The screw thread 17d is provided in an outer circumferential surface of the threaded portion 17a. The threaded portion 17a is fitted in the female thread member 172. The operation portion 17b is continuous with the threaded portion 17a. The outer diameter of the operation portion 17b is larger than the outer diameter of the threaded portion 17a. Even when the male thread member 171 is received in the most inward of the female thread member 172 (even when the length of the threaded part 17 with respect to the axial direction X is a minimum), the operation portion 17b is not hidden in the female thread member 172 but exposed radially outside of the piston rod part 12. A plurality of projections 17e are provided on an outer circumferential surface of the operation portion 17b. The plurality of projections 17e are spaced apart from one another with respect to a circumferential direction of the piston rod part 12. The contact portion 17c is continuous with the operation portion 17b. The contact portion 17c is in contact with the piston part 15. When the threaded part 17 extends, the contact portion 17c pushes the piston part 15 in the direction where the stretching force F1 is generated. The reference sign F1 denotes the stretching force that is transmitted from the threaded part 17 to the piston part 15 when the threaded part 17 extends. More specifically, the contact portion 17c is in contact with a portion of the piston part 15 located at the axis line J side relative to the fluid passages 15a, 15b. The inner diameter of the male thread member 171 is larger than the outer diameter of the piston rod part 12. Accordingly, the male thread member 171 is supported on the piston rod part 12 in a freely rotatable manner.

The female thread member 172 includes a threaded portion 17g and a reduced-diameter portion 17h. The threaded portion 17g and the reduced-diameter portion 17h are integral with the female thread member 172. The threaded portion 17g is one example of the second exposed portion of the present invention. The reduced-diameter portion 17h is also one example of the second exposed portion of the present invention. The threaded portion 17g is a portion to be fitted on the screw thread 17d of the male thread member 171. The screw thread 17j is provided in an inner circumferential surface of the threaded portion 17g. The reduced-diameter portion 17h is continuous with the threaded portion 17g. The inner diameter of the reduced-diameter portion 17h is smaller than the inner diameter of the threaded portion 17g. The inner diameter of the reduced-diameter portion 17h is larger than the outer diameter of the piston rod part 12. Accordingly, the female thread member 172 is supported on the piston rod part 12 in a freely rotatable manner. The threaded portion 17g and the reduced-diameter portion 17h are exposed radially outside of the piston rod part 12. The thread portion 17g and the reduced-diameter portion 17h include, on an outer circumferential surface thereof, projections 17k that are spaced apart with respect to the circumferential direction.

As described above, the male thread member 171 and the female thread member 172 are supported on the piston rod part 12 in a freely rotatable manner. That is, the threaded part 17 is supported on the piston rod part 12 in a freely rotatable manner.

The piston valve assembly A1 also includes a first retainer 191, a second retainer 192, a check valve element 18, a check valve retainer 182, and a pressurizing spring 181.

The first retainer 191 and the second retainer 192 are members that retain the damping valve element 16. The first retainer 191 and the second retainer 192 are arranged at the side opposite to the piston part 15 across the damping valve element 16. Each of the first retainer 191 and the second retainer 192 is an annular set collar through which the piston rod part 12 penetrates. Instead, for example, a washer may be also used as each of the first retainer 191 and the second retainer 192. The first retainer 191 and the second retainer 192 are arranged side by side with respect to the axial direction X. The first retainer 191 is in contact with the fixing clip 13A. The second retainer 192 is in contact with the damping valve element 16. The first retainer 191 and the second retainer 192 push the damping valve element 16 toward the piston part 15, and thereby retain the damping valve element 16.

The first retainer 191 includes a surface that faces opposite to the damping valve element 16. This surface includes an accommodating recess 19n. The accommodating recess 19n accommodates the fixing clip 13A. Here, the first retainer 191 having no accommodating recess 19n may also be used.

The check valve element 18, the check valve retainer 182, and the pressurizing spring 181 are arranged at the side opposite to the damping valve element 16 across the piston part 15. The check valve element 18 is positioned such that the check valve element 18 closes an opening of the fluid passage 15b provided in the piston part 15. The check valve element 18 includes a plate through which the piston rod part 12 penetrates. The pressurizing spring 181 supported on the check valve retainer 182 having a cup shape pressurizes the check valve element 18 toward the piston pars 15. The check valve element 18 and the damping valve element 16 prevent flows of the hydraulic oil in opposite directions.

The shock absorber 1 of this embodiment also includes a biasing element 14. The biasing element 14 is a compression coil spring wound around the piston rod part 12. The biasing element 14 is arranged between the piston valve assembly A1 and the closure 112. The biasing element 14 applies, to the piston valve assembly A1, a force directed from the outside toward the inside of the space S between the pair of fixing clips 13A, 13B with respect to the axial direction X of the piston rod part 12.

A contact surface 17m that is in contact with the biasing element 14 is provided at one end of the piston valve assembly A1 with respect to the axial direction X of the piston rod part 12. To be more specific, the contact surface 17m is provided on the reduced-diameter portion 17h of the female thread member 172. The contact surface 17m is an annular surface encircling the piston rod part 12, and faces along the axial direction X. The biasing element 14 of this embodiment is in contact with the contact surface 17m.

The contact surface 17m includes an accommodating recess 17n that is concave in a direction from the outside toward the inside of the space S between the pair of fixing clips 13A, 13B with respect to the axial direction X. The accommodating recess 17n accommodates the fixing clip 13B which is one of the pair of fixing clips 13A, 13B. The accommodating recess 17n circularly extends around an inner circumferential edge of the annular contact surface 17m. The diameter length of the accommodating recess 17n is larger than the outer diameter of the fixing clip 13B. Therefore, the fixing clip 13B is at least partially accommodated in the accommodating recess 17n. In this embodiment, the fixing clip 13B is entirely accommodated in the accommodating recess 17n with respect to the axial direction X. Accordingly, the biasing element 14 is in contact with the contact surface 17m while not in contact with the fixing clip 13B.

In this embodiment, the piston part 15, the damping valve element 16, and the threaded part 17 are separate members, and not directly fixed to one another. The piston part 15, the damping valve element 16, and the threaded part 17 are arranged between the pair of fixing clips 13A, 13B with respect to the axial direction X of the piston rod part 12. The piston valve assembly A1 is arranged such that extension of the threaded part 17 causes the stretching force F1 to act on the piston part 15, the damping valve element 16, and the threaded part 17, so as not to move the piston part 15, the damping valve element 16 and the threaded part 17 relative to the piston rod part 12 with respect to the axial direction X.

### [Fundamental Operation of Shock Absorber]

In the shock absorber 1, the piston rod part 12 is coupled to either one of a vehicle body side (not shown) or a wheel side (not shown), while the cylinder part 11 is coupled to the other thereof. The shock absorber 1 is compressed or extended in accordance with a load. At this time, the piston rod part 12 and the piston part 15 move within the cylinder part 11. Referring to FIG. 1, the arrow L1 indicates a flow of the hydraulic oil under a state where the shock absorber 1 is compressed, and the arrow L2 indicates a flow of the hydraulic oil under a state where the shock absorber 1 is extended.

When the shock absorber 1 is compressed, the piston rod part 12 and the piston part 15 move relative to the cylinder part 11 in a direction leading from the piston part 15 to the damping valve element 16, that is, leftward in FIG. 1. At this time, the fluid passage 15a is closed by the damping valve element 16. This restricts a flow of the hydraulic oil in the fluid passage 15a. On the other hand, the hydraulic oil flows from the hydraulic oil chamber 10A into the fluid passage 15b through a space between the damping valve element 16 and the piston part 15. The hydraulic oil causes displacement of the check valve element 18 against the pressure applied by the pressurizing spring 181. As a result, the fluid passage 15b is opened, so that the hydraulic oil flows from the fluid passage 15b into the hydraulic oil chamber 10B, as indicated by the arrow L1.

When the shock absorber 1 is extended, the piston rod part 12 and the piston part 15 move relative to the cylinder part 11 in a direction leading from the damping valve element 16 to the piston part 15, that is, rightward in FIG. 1. At this time, the fluid passage 15b is closed by the check valve element 18. This restricts a flow of the hydraulic oil in the fluid passage 15b. On the other hand, the hydraulic oil flows from the hydraulic oil chamber 10B into the fluid passage 15a through a space between the check valve element 18 and the piston part 15. The hydraulic oil causes deformation of the damping valve element 16 against an elastic force of the damping valve element 16. The damping valve element 16 is, at an outer periphery thereof with respect to the radial direction, bent away from the piston part 15 with respect to the axial direction X of the piston rod part 12. As a result, the fluid passage 15a is opened, so that the hydraulic oil flows from the fluid passage 15a into the hydraulic oil chamber 10A, as indicated by the arrow L2.

The performance of the damping valve element 16, which determines the damping force of the shock absorber 1, is adjustable by the number of the shims 161. For example, to increase the damping force, the number of the shims 161 is increased, while to reduce the damping force, the number of the shims 161 is reduced. The damping force is also adjustable by providing shims 161 having different shapes, thicknesses, or diameters, or by providing shims 161 made of different materials. In this manner, the damping force of the shock absorber 1 can be adjusted, for example, in accordance with the type of the vehicle. The dimension of the damping valve element 16 with respect to the axial direction X changes in accordance with the total thickness of one or more shims 161.

When the piston rod part 12 and the piston part 15 move under a state where the shock absorber 1 is extended, the biasing element 14 arranged between the female thread member 172 and the closure 112 elastically deforms. The biasing element 14 applies, to the piston valve assembly A1, an elastic force traveling from the outside toward the inside of the space S between the pair of fixing clips 13A, 13B with respect to the axial direction X of the piston rod part 12.

The biasing element 14 is in contact with the contact surface 17m provided in the female thread member 172. The fixing clip 13B is also in contact with the contact surface 17m. Since the fixing clip 13B is accommodated in the accommodating recess 17n provided on the contact surface 17m, the extent to which the fixing clip 13B protrudes from the contact surface 17m is suppressed. This can stabilize the posture of the biasing element 14 being in contact with the contact surface 17m.

More specifically, the fixing clip 13B of this embodiment does not protrude from the contact surface 17m. The biasing element 14 is in contact with the contact surface 17m while not in contact with the fixing clip 13B. Since the biasing element 14 and the fixing clip 13B do not interfere with each other, the posture of the biasing element 14 being in contact with the contact surface 17m is further stabilized. As a result, the stability of generation of the damping force is improved.

### [Assembling of Shock Absorber 1]

A process of assembling the shock absorber 1 will be described.

In the process of assembling the shock absorber 1, firstly, the piston rod part 12 including the pair of recesses 12r is prepared. The recesses 12r are grooves in which the pair of fixing clips 13A, 13B are to be fitted. A screw thread is not provided on at least a portion of the outer circumferential surface of the piston rod part 12. This portion is a portion that will be in contact with the piston valve assembly A1 when the piston valve assembly is mounted later. The recesses 12r include no screw thread.

In a next step, one of the pair of fixing clips 13A, 13B is attached to the piston rod part 12. The fixing clip 13A or the fixing clip 13B is fitted in the recess 12r, and thereby fixed to the piston rod part 12 while protruding from the outer circumferential surface of the piston rod part 12.

In a next step, the piston part 15, the damping valve element 16, and the threaded part 17 are attached to the piston rod part 12. The piston part 15, the damping valve element 16, and the threaded part 17 are separate members, and not directly fixed to one another. To be specific, in this step, the piston rod part 12 is sequentially inserted through the damping valve element 16, the piston part 15, and the threaded part 17. In this step, the piston rod part 12 is also inserted through the first retainer 191, the second retainer 192, the check valve element 18, the check valve retainer 182, and the pressurizing spring 181. The damping valve element 16 includes the shims 161, the number of which is adjusted in accordance with a desired damping force. The piston rod part 12 is inserted through the threaded part 17 under a state where the male thread member 171 is fitted with the female thread member 172. Here, it may be also acceptable that the piston rod part 12 is inserted through the female thread member 172 and the male thread member 171 that are not screwed to each other, and then the female thread member 172 and the male thread member 171 are fitted with each other before the fixing clips 13A, 13B are attached.

In the shock absorber 1 of this embodiment, it is not necessary that the piston part 15, the damping valve element 16, and the threaded part 17, which are separate members, are fixed to one another in advance. Therefore, a process of manufacturing the shock absorber 1 is simplified.

In a next step, the rest of the pair of fixing clips 13A, 13B is attached to the piston rod part 12. Thereby, the piston part 15, the damping valve element 16, and the threaded part 17 are arranged between the pair of fixing clips 13A, 13B with respect to the axial direction X. In this stage of arrangement, however, the piston part 15, the damping valve element 16, the threaded part 17, the first retainer 191, and the second retainer 192 cause backlash in the axial direction X. Both the male thread member 171 and the female thread member 172 of the threaded part 17 are freely rotatable relative to the piston rod part 12.

In a next step, the female thread member 172 of the threaded part 17 is rotated relative to the male thread member 171, so that the female thread member 172 and the male thread member 171 are moved away from each other with respect to the axial direction X. This movement extends the threaded part 17 in the axial direction X to cause the stretching force F1 to act on the piston part 15, the damping valve element 16, and the threaded part 17.

The stretching force F1, which acts on the pair of fixing clips 13A, 13B, is a force traveling toward the outside of the space S between the pair of fixing clips 13A, 13B with respect to the axial direction X. Since the threaded part 17 is extendable in the axial direction X between the fixing clips 13A, 13B, the stretching force F1 efficiently acts on the pair of fixing clips 13A, 13B.

The male thread member 171 and the female thread member 172 are in contact with the outer circumferential surface of the piston rod part 12. That is, the threaded part 17 is extended under a state where the male thread member 171 and the female thread member 172 are positioned on a line segment that connects the pair of fixing clips 13A, 13B to each other. Accordingly, the stretching force F1 further efficiently acts on the pair of fixing clips 13A, 13B.

The stretching force F1 acts between the fixing clips 13A, 13B, and thereby the piston part 15 and the damping valve element 16 are retained to the piston rod part 12 not to move with respect to the axial direction X. Additionally, due to the stretching force F1, the damping valve element 16 is pressed against the piston part 15. Thus, retaining of the piston part 15 and the damping valve element 16 to the piston rod part 12 and pressing of the damping valve element 16 against the piston part 15 are implemented by a single operation. The damping valve element 16 is pressed against the piston part 15 with an appropriate force irrespective of the number of the shims 161.

At a time point when the piston part 15 and the damping valve element 16 are retained to the piston rod part 12, the operation portion 17b of the male thread member 171 is exposed radially outside of the piston rod part 12. The threaded portion 17g and the reduced-diameter portion 17h of the female thread member 172 are also exposed radially outside of the piston rod part 12. These portions exposed outside can be held by an assembling machine or an operator's hand, for the rotation of the female thread member 172 relative to the male thread member 171, to thereby retain the piston part 15 and the damping valve element 16 to the piston rod part 12 so as not to move with respect to the axial direction X. Accordingly, an assembling operation can be easily performed.

The outer diameter of the operation portion 17b of the male thread member 171 is larger than the outer diameter of the threaded portion 17a that is screwed into the female thread member 172. This can prevent the assembling machine or the operator's hand from interfering with the female thread member 172 when holding the operation portion 17b. The projections 17e spaced apart with respect to the circumferential direction are provided on the outer circumferential surface of the operation portion 17b of the male thread member 171, and the projections 17k spaced apart with respect to the circumferential direction are provided on the outer circumferential surfaces of the threaded portion 17g and the reduced-diameter portion 17h of the female thread member 172. This facilitates the operation of rotating the female thread member 172 relative to the male thread member 171.

In a next step, the piston rod part 12 is inserted through the biasing element 14. As a result, the biasing element 14 is supported on the piston rod part 12 while encircling the piston rod part 12.

In a next step, the piston rod part 12 is inserted into the cylinder part 11, and the openings of the cylinder part 11 are closed by the pair of closures 111, 112. It may be possible that one of the pair of closures 111, 112 already closes the opening of the cylinder part 11 at a time point before the piston rod part 12 is inserted into the cylinder part 11.

Through the above-described steps, the shock absorber 1 shown in FIG. 1 is assembled.

In the shock absorber 1 of this embodiment, the piston rod part 12 arranged as a single member penetrates through the piston part 15. This ensures a sufficient degree of consistency of the axis line J of the piston rod part 12 at opposite sides of the piston part 15. This also ensures a sufficient strength of the piston rod part 12 as a whole.

In the shock absorber 1 of this embodiment, the piston part 15 and the damping valve element 16 are retained to the piston rod part 12 not to move with respect to the axial direction X due to the stretching force F1 that is generated by the male thread member 171 and the female thread member 172 being rotated relative to each other. This enables adjustment of the number of the shims 161 included in the damping valve element 16. The screw threads 17d, 17j, which are used for retaining, are provided not in the piston rod part 12 but in the male thread member 171 and the female thread member 172 that are members separate from the piston rod part 12. Therefore, the piston rod part 12 does not involve deformation caused by threading. The male thread member 171 and the female thread member 172 can involve deformation caused by threading. However, the stretching force F1 caused by the male thread member 171 and the female thread member 172 acts on the piston rod part 12 in the axial direction X. Thus, its influence on the piston rod part 12 with respect to deformation of the male thread member 171 and the female thread member 172 is as small as negligible, as compared with an influence of deformation of the piston rod part itself.

In the shock absorber 1 of this embodiment, deformation caused by threading is not generated in the piston rod part 12. This enables adjustment of the number of the shims 161, and suppresses a decrease in the degree of consistency of the axis line J of the piston rod part 12 at opposite sides of the piston part 15.

Accordingly, the shock absorber 1 of this embodiment can facilitate disassembling or assembling operations such as rearrangement of plate members, can ensure a sufficient strength of the piston rod part 12, and can ensure a high degree of consistency of the axis line J of the piston rod part 12 at opposite sides of the piston part 15. Thus, a stable generation of the damping force is enabled.

The shock absorber 1 of this embodiment is arranged such that the male thread member 171 and the female thread member 172 are supported on the piston rod part 12 in a freely rotatable manner. In the process of assembling the shock absorber 1, as already described, the operation of rotating the male thread member 171 and the female thread member 172 relative to each other causes a shift from a state where the stretching force F1 is not generated to a state where the stretching force F2 is generated. In this embodiment, the male thread member 171 and the female thread member 172 are not fixed to the piston rod part 12. In this case, a force traveling in a rotation direction is less likely to be transmitted to the piston rod part 12, as compared with a case where, for example, one of the male thread member and the female thread member is fixed to the piston rod part 12 with respect to the rotation direction. Therefore, deformation of the piston rod part 12 in the assembling process is effectively suppressed. Thus, the degree of consistency of the axis line of the piston rod part 12 at opposite sides of the piston part 15 is further increased.

### <Second Embodiment of Present Invention>

Next, a second embodiment of the present invention will be described.

In the description of the second embodiment given below, the same elements as those of the above-described embodiment will be denoted by the same reference signs, or the reference signs will be omitted and differences from the above-described embodiment will be described.

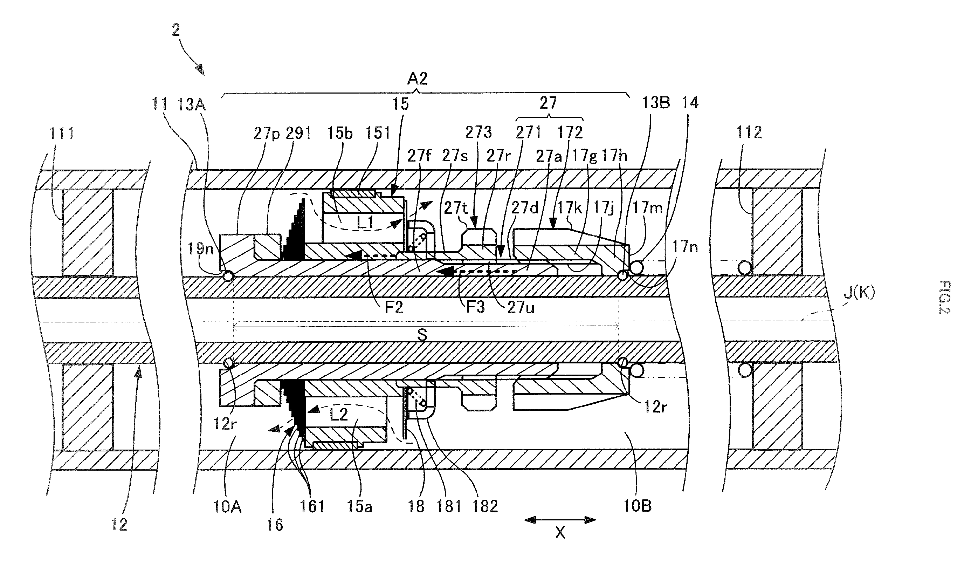

FIG. 2 is a cross-sectional view schematically showing a principal part of a shock absorber according to the second embodiment.

In a shock absorber 2 shown in FIG. 2, the piston part 15, the damping valve element 16, and a threaded part 27 are separate members. A piston valve assembly A2 includes a fastening thread member 273 in addition to the threaded part 27. In the shock absorber 2, a male thread member 271 included in the threaded part 27 has a length longer than the male thread member 171 of the first embodiment shown in FIG. 1 with respect to the axial direction X. The male thread member 271 penetrates through the piston part 15 and the damping valve element 16 in the axial direction X. More specifically, the male thread member 271 penetrates through the fastening thread member 273, the check valve element 18, the check valve retainer 182, the pressurizing spring 181, the piston part 15, the damping valve element 16, and a retainer 291. Similarly to the male thread member 171 of the first embodiment, the male thread member 271 has the piston rod part 12 passing therethrough. The inner diameter of the male thread member 271 is larger than the outer diameter of the piston rod part 12. The male thread member 271 and the female thread member 172 are arranged at positions between the pair of fixing clips 13A, 13B with respect to the axial direction X, and are in contact with the outer circumferential surface of the piston rod part 12.

The male thread member 271 includes a threaded portion 27a, a penetrating portion 27f, and a retaining portion 27p. The threaded portion 27a, the penetrating portion 27f, and the retaining portion 27p are integral.

A screw thread 27d is provided on an outer circumferential surface of the threaded portion 27a. A distal end of the threaded portion 27a is fitted with the female thread member 172. In other words, the screw thread 27d of the threaded portion 27a is screwed to the screw thread 17j of the female thread member 172. The penetrating portion 27f is a cylindrical portion continuous with the threaded portion 27a. The penetrating portion 27f penetrates through the piston part 15, the damping valve element 16, and the retainer 291.

The retaining portion 27p is provided at the side opposite to the threaded portion 27a across the penetrating portion 27f. The retaining portion 27p is a flange-shaped portion continuous with the penetrating portion 27f. Here, the retaining portion 27p may be arranged as, for example, projections spaced apart in a circumferential direction of the male thread member 271 or a separate member attached to the male thread member 271. The outer dimension of the retaining portion 27p is larger than the inner diameter of the retainer 291. Thus, the retaining portion 27p blocks the piston part 15, the damping valve element 16, and the retainer 291 from falling off from the male thread member 271. The retaining portion 27p is exposed radially outside of the piston rod part 12. The retaining portion 27p is one example of the first exposed portion of the present invention.

The fastening thread member 273 is an annular member including a threaded portion 27r and a contact portion 27s. The threaded portion 27r and the contact portion 27s are integral with the fastening thread member 273. A screw thread 27u is provided on an inner circumferential surface of the threaded portion 27r. The shape of the screw thread 27u corresponds to the shape of the screw thread 27d provided in the male thread member 271. An outer circumferential surface of the threaded portion 27r includes a plurality of projections 27t. The plurality of projections 27t are spaced apart from one another with respect to the circumferential direction of the piston rod part 12.

The fastening thread member 273 is, at a position opposite to the retaining portion 27p across the damping valve element 16 and the piston part 15, fitted with the male thread member 271. To be specific, the threaded portion 27a of the male thread member 271 is fitted with the threaded portion 27r of the fastening thread member 273.

The threaded portion 27a of the male thread member 271 penetrates through the fastening thread member 273, and is inserted part way into the female thread member 172. That is, both the screw thread 17j of the female thread member 172 and the screw thread 27u of the fastening thread member 273 are screwed to the screw thread 27d of the male thread member 271.

Rotation of the fastening thread member 273 relative to the male thread member 271 generates a fastening force F2. The fastening force F2 is a force traveling in the axial direction X and fastening the damping valve element 16 and the piston part 15 to a position between the fastening thread member 273 and the retaining portion 27p. The fastening force F2 causes the piston part 15 and the damping valve element 16 to be pressed against the retaining portion 27p with interposition of the retainer 291 and to be fastened to each other. As a result, the piston part 15 and the damping valve element 16 are retained to the male thread member 271 so as not to move with respect to the axial direction X of the piston rod part 12 without the following stretching force F3.

The piston valve assembly A2 according to this embodiment is arranged such that extension of the threaded part 27 causes the stretching force F3 to act on the threaded part 27, so as not to move the piston part 15 and the damping valve element 16 relative to the piston rod part 12 with respect to the axial direction X.

The piston valve assembly A2 is in abutting contact with the fixing clips 13A, 13B. The abutting contact occurs in the direction from the inside toward the outside of the space S between the pair of fixing clips 13A, 13B with respect to the axial direction X of the piston rod part 12. More specifically, the male thread member 271 and the female thread member 172 included in the threaded part 27 are in abutting contact with the fixing clips 13A and 13B, respectively. The abutting contact occurs in the direction from the inside toward the outside of the space S between the pair of fixing clips 13A, 13B with respect to the axial direction X of the piston rod part 12.

When the female thread member 172 is rotated relative to the male thread member 271, the threaded part 27 is extended, to cause the stretching force F3 between the pair of fixing clips 13A, 13B. Due to the stretching force F3, the male thread member 271 is retained to the piston rod part 12 so as not to move with respect to the axial direction X. That is, the piston part 15 and the damping valve element 16 retained to the male thread member 271 are retained relative to the piston rod part 12 with respect to the axial direction X.

In the shock absorber 2 of this embodiment, the fastening force F2 that retains the piston part 15 and the damping valve element 16 to the male thread member 271, and the stretching force F3 that retains the piston part 15 and the damping valve element 16 to the piston rod part 12 with interposition of the male thread member 271, are different forces.

Since fundamental operation of the shock absorber 2 of this embodiment is the same as the fundamental operation of the shock absorber 1 of the first embodiment, a description thereof is omitted.

### [Assembling of Shock Absorber 2]

A process of assembling the shock absorber 2 according to this embodiment will be described.

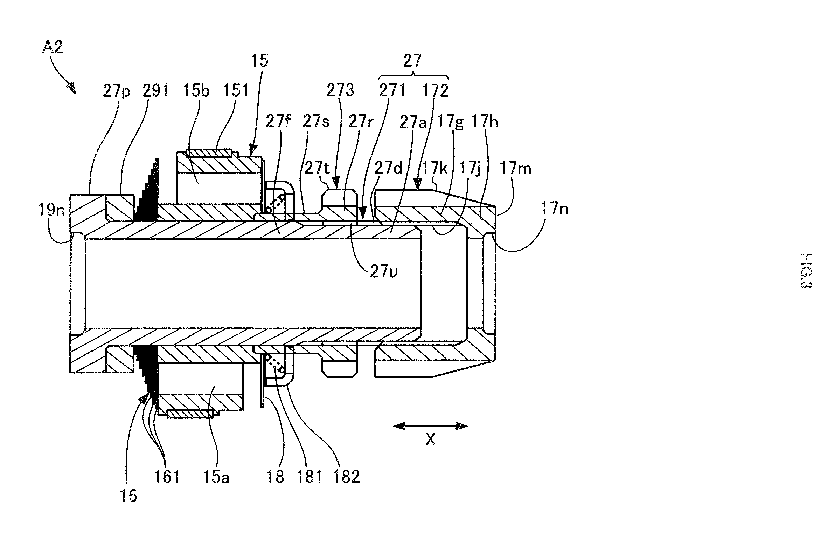

FIG. 3 is a cross-sectional view showing the piston valve assembly A2 included in the shock absorber 2 shown in FIG. 2.

Assembly of the shock absorber 2 can be divided into assembly of the piston valve assembly A2 shown in FIG. 3 and assembly of the shock absorber 2 as a whole (see FIG. 2) by using the piston valve assembly A2 as a sub assembly.

In the assembly of the piston valve assembly A2 shown in FIG. 3, firstly, the male thread member 271 is inserted through the retainer 291, the damping valve element 16, the piston part 15, the check valve element 18, the check valve retainer 182, and the pressurizing spring 181. The damping valve element 16 includes the shims 161, the number of which is varied in accordance with a desired damping force. Next, the fastening thread member 273 is fitted with the male thread member 271. When the fastening thread member 273 is rotated relative to the male thread member 271, the fastening thread member 273 moves on the male thread member 271 in the axial direction X toward the retaining portion 27p, so that the fastening force F2 is generated. The fastening force F2 causes the piston part 15, the damping valve element 16, and the retainer 291 to be fastened at a position between the retaining portion 27p of the male thread member 271 and the fastening thread member 273. Thereby, the piston part 15 and the damping valve element 16 are retained to the male thread member 271 so as not to move with respect to the axial direction X. The fastening force F2 also causes the damping valve element 16 to be pressed against the piston part 15.

In a next step, the female thread member 172 is fitted with the male thread member 271.

In this manner, the piston valve assembly A2 including the piston part 15 and the damping valve element 16 retained to the male thread member 271 is completed.

Next, the whole of the shock absorber 2 shown in FIG. 2 is assembled with use of the piston valve assembly A2.

Firstly, the fixing clip 13A, which is one of the pair of fixing clips 13A, 13B, is attached to the piston rod part 12 including the pair of recesses 12r. The fixing clip 13A is fitted in the recess 12r, and thereby fixed to the piston rod part 12 while protruding from the outer circumferential surface of the piston rod part 12.

In a next step, the piston rod part 12 is inserted through the piston valve assembly A2 that has been previously assembled. The piston valve assembly A2 is a sub assembly in which the piston part 15 and the damping valve element 16 are retained to the male thread member 271 in advance. Thus, the piston valve assembly A2 is handled as an integral component.

In a next step, the fixing clip 13B, which is the rest of the pair of fixing clips 13A, 13B, is attached to the piston rod part 12. As a result, the threaded part 27 is arranged between the pair of fixing clips 13A, 13B with respect to the axial direction X. At this stage, the stretching force F3 that can be exerted by the threaded part 27 is not generated. The male thread member 271 and the female thread member 172 of the threaded part 27 are supported on the piston rod part 12 in a freely rotatable manner.

In a next step, the piston valve assembly A2 (see FIG. 3) is retained to the piston rod part 12. More specifically, the female thread member 172 is rotated relative to the male thread member 271, so that the threaded part 27 is extended in the axial direction X, to thereby generate the stretching force F3. Due to the stretching force F3, the piston valve assembly A2 is retained to the piston rod part 12 not to move with respect to the axial direction X. That is, the piston part 15 and the damping valve element 16 retained to the male thread member 271 are also retained to the piston rod part 12 so as not to move with respect to the axial direction X.

The stretching force F3 is a force traveling in the axial direction X and acting on the pair of fixing clips 13A, 13B in the outward direction from the threaded part 27, that is, from the male thread member 271 and the female thread member 172. In this embodiment, similarly to the first embodiment, the threaded part 27 is extendable in the axial direction X between the fixing clips 13A, 13B. Therefore, the stretching force F3 efficiently acts on the pair of fixing clips 13A, 13B. The male thread member 271 and the female thread member 172 are in contact with the outer circumferential surface of the piston rod part 12. That is, the threaded part 27 is extended under a state where the male thread member 271 and the female thread member 172 are positioned on a line segment that connects the pair of fixing clips 13A, 13B to each other. Accordingly, the stretching force F3 further efficiently acts on the pair of fixing clips 13A, 13B.

The retaining portion 27p of the male thread member 271, and the threaded portion 17g and the reduced-diameter portion 17h of the female thread member 172, are exposed radially outside of the piston rod part 12. In the step of retaining the piston valve assembly A2 to the piston rod part 12, these portions exposed outside can be held by an assembling machine or an operator's hand, for the rotation of the female thread member 172 relative to the male thread member 271.

In a next step, the piston rod part 12 is inserted through the biasing element 14. As a result, the biasing element 14 is supported on the piston rod part 12. Similarly to the first embodiment, the biasing element 14 is in contact with the contact surface 17m while not in contact with the fixing clip 13B.

In a next step, the piston rod part 12 is inserted into the cylinder part 11, and the openings of the cylinder part 11 are closed by the pair of closures 111, 112. It may be possible that one of the pair of closures 111, 112 already closes the opening of the cylinder part 11 at a time point before the piston rod part 12 is inserted into the cylinder part 11.

Through the above-described steps, the shock absorber 2 shown in FIG. 2 is assembled.

In the process of assembling the shock absorber 2 of this embodiment, the piston part 15 and the damping valve element 16 are retained to the threaded part 27 so that the piston valve assembly A2 is completed, before the piston part 15 and the damping valve element 16 are attached to the piston rod part 12. The piston valve assembly A2 is an integral sub assembly. The sub assembly is attached to the piston rod part 12 in a subsequent step, and thereby the piston part 15 and the damping valve element 16 are retained to the piston rod part 12. This provides easy handling during attaching of the piston part 15, the damping valve element 16, and the threaded part 27 to the piston rod part 12.

In this embodiment, similarly to the first embodiment, the piston part 15 and the damping valve element 16 of the shock absorber 2 are retained to the piston rod part 12 due to the stretching force F3 that is generated by extension of the threaded part 27 in the axial direction X. Accordingly, the shock absorber 2 of this embodiment enables adjustment of the number of the shims 161 included in the damping valve element 16. Similarly to the first embodiment, the piston rod part 12 arranged as a single member penetrates through the piston part 15, and therefore a distortion caused by threading is not generated in the piston rod part 12. This ensures a sufficient strength of the piston rod part 12 as a whole, and also ensures a sufficient degree of consistency of the axis line J of the piston rod part 12 at opposite sides of the piston part 15.

In the shock absorber 2 of this embodiment, the male thread member 271 and the female thread member 172 are supported on the piston rod part 12 in a freely rotatable manner. That is, the male thread member 271 and the female thread member 172 are not fixed to the piston rod part 12. In the shock absorber 2 of this embodiment, a force traveling in a rotation direction which is caused in the generation of the stretching force is less likely to be transmitted to the piston rod part 12, as compared with a case where, for example, one of the male thread member and the female thread member is fixed to the piston rod part with respect to the rotation direction. Thus, the degree of consistency of the axis line J of the piston rod part 12 at opposite sides of the piston part 15 is further increased.

### < Variations of the Embodiments>

While some embodiments of the present invention have been described above, the present invention is not limited to the above-described embodiments.

The above-described first and second embodiments illustrate an example where the hydraulic oil is loaded in the cylinder part 11 and the interior of the cylinder part 11 is partitioned into the two hydraulic oil chambers 10A, 10B. The present invention is not limited to this example. It suffices that a working fluid is loaded in the cylinder. For example, it may be also acceptable that a gas is loaded in the cylinder and the interior of the cylinder part 11 is partitioned into two gas chambers.

The above-described first and second embodiments illustrate an example where the threaded part 17 that is a member separate from the piston part 15 and the damping valve element 16 is used as the threaded part. The present invention is not limited to this example. For example, a configuration in which a screw thread provided in a piston part is fitted with another thread member may be used for the threaded part.

The above-described first and second embodiments illustrate an example where the fixing clips 13A, 13B that are C-shaped rings are used as the protruding members. The present invention is not limited to this example . For example, a combination of a plurality of arc-shaped members may be used as the protruding member. Alternatively, a rod-shaped member received through a hole provided in the piston rod part may be used as the protruding member.

The above-described first and second embodiments illustrate an example where the threaded part 17 (27) that is extendable in the axial direction X between the fixing clips 13A, 13B is used as the threaded part. The present invention is not limited to this example. It may be also acceptable that the threaded part is extendable in a region outside the pair of protruding members with respect to the axial direction X. The above-described first and second embodiments illustrate an example case where the threaded part 17 (27) including the male thread member 171 (271) and the female thread member 172 that are in contact with the piston rod part 12 is used as the threaded part. The present invention is not limited to this example. It may be also acceptable that at least one of the male thread member and the female thread member is not in contact with the piston rod part 12.

The above-described first and second embodiments illustrate an example where the female thread member 172 is in direct contact with the fixing clip 13B. The present invention is not limited to this example. For example, another member such as a washer may be interposed between the female thread member and the protruding member.

The above-described first and second embodiments illustrate an example where the female thread member 172 includes the threaded portion 17g and the reduced-diameter portion 17h, and the inner diameter of the reduced-diameter portion 17h is smaller than the inner diameter of the threaded portion 17g. The present invention is not limited to this example. In another possible example, the female thread member is arranged as a cylinder whose inner diameter is constant throughout the length of the cylinder with respect to the axial direction, and a member such as a washer, which is separate from the female thread member, is interposed between the female thread member and the protruding member.

The above-described first and second embodiments illustrate an example where the contact surface 17m provided in the female thread member 172 is used as the contact surface of the piston valve assembly of the present invention. The present invention is not limited to this example. The contact surface may be a surface provided in a washer that is separate from the female thread member. Moreover, it may be acceptable that the accommodating recess 17n of the present invention is also provided in the washer.

The above-described first and second embodiments illustrate an example case where the female thread member 172 includes the projections 17k. The present invention is not limited to this example case. The female thread member may include no projection.

The above-described first and second embodiments illustrate an example where both the male thread member 171 (271) and the female thread member 172 are supported on the piston rod part 12 in a freely rotatable manner. The present invention is not limited to this example. For example, the male thread member or the female thread member may be fixed to the piston rod part with respect to the rotation direction by means of a key or a key groove.

The above-described first and second embodiments illustrate an example where the entire female thread member 172 including the threaded portion 17g and the reduced-diameter portion 17h is used as the second exposed portion. The present invention is not limited to this example. The second exposed portion may be a part, and not the whole, of the female thread member.

The above-described first embodiment illustrates an example where the operation portion 17b having a thickness larger than that of the threaded portion 17a and including the projections 17e provided thereon is used as the first exposed portion of the male thread member of the present invention. The present invention is not limited to this example. For example, the first exposed portion of the male thread member may have the same thickness as the thickness of the other portions. The first exposed portion may have no projection.

The above-described second embodiment illustrates an example where the retaining portion 27p having no projection spaced apart with respect to the circumferential direction is used as the first exposed portion of the male thread member of the present invention. The present invention is not limited to this example. For example, the first exposed portion of the male thread member may have projections.

The above-described first and second embodiments illustrate an example where the biasing element 14 that is a coil spring is used as the biasing element of the present invention. The present invention is not limited to this example. The biasing element may be, for example, a plate spring.

The above-described first and second embodiments illustrate an example where the damping valve element 16 arranged to be deformable so that the hydraulic-oil fluid passage is opened is used as the damping valve element of the present invention. The present invention is not limited to this example. For example, the valve element may be arranged to be displaceable so that the fluid passage is opened.

The above-described first embodiment illustrates an example where the shock absorber 1 includes the first retainer 191 and the second retainer 192. The present invention is not limited to this example. The retainers may be partially or completely removed.

While some preferred embodiments of the present invention have been thus far described, it is obvious that various changes and modifications can be made within the scope and the spirit of the present invention. The scope of the present invention is limited only by the accompanied claims.

### DESCRIPTION OF THE REFERENCE SIGNS

- 1, 2: shock absorber
- A1, A2: piston valve assembly
- 10A , 10B: hydraulic oil chamber
- 11: cylinder part
- 111, 112: closure
- 12: piston rod part
- 12r: recess
- 13A, 13B: fixing clip
- 14: biasing element
- 15: piston part
- 151: packing
- 15a, 15b: fluid passage
- 16: damping valve element
- 161: shim
- 17,27: threaded part
- 171,271: male thread member
- 172: female thread member
- 17a, 17g, 27a: threaded portion
- 17d, 17j, 27d: screw thread
- 17n: accommodating recess
- 17h: reduced-diameter portion
- 17c: contact portion
- 17m: contact surface
- 17b: operation portion
- 17e, 17k: projection
- 27f: penetrating portion
- 27p: retaining portion
- 18: check valve element
- 181: pressurizing spring
- 182: check valve retainer
- 191: first retainer
- 192: second retainer
- 19n: accommodating recess
- 273: fastening thread member
- 27r: threaded portion
- 27u: screw thread
- 27s: contact portion
- 27t: projection
- 291: retainer
- F1, F3: stretching force
- F2: fastening force
- J, K: axis line
- L1: arrow
- L2: arrow
- S: space
- X: axial direction

## Claims

1. A shock absorber comprising:
a cylinder part (11) having a cylindrical shape;
a piston rod part (12) arranged in the cylinder part (11), the piston rod part (12) being configured as a single member;
a pair of protruding members (13A, 13B) protruding from an outer circumferential surface of the piston rod part (12), the pair of protruding members (13A, 13B) being spaced apart from each other with respect to an axial direction (X) of the piston rod part (12); and
a piston valve assembly (A1, A2) having the piston rod part (12) passing therethrough, the piston valve assembly (A1, A2) being in abutting contact with the pair of protruding members(13A, 13B), the abutting contact occurring in a direction from an inside toward an outside of a space (S) between the pair of protruding members (13A, 13B) with respect to the axial direction (X) of the piston rod part (12),
the piston valve assembly (A1, A2) including:
a piston part (15) having the piston rod part (12) passing therethrough, the piston part (15) being arranged to partition an interior of the cylinder part (11) into two regions;
a valve element (16) including one or a plurality of plate members (161), the valve element (16) being adjacent to the piston part (15) with respect to the axial direction (X) of the piston rod part (12), the valve element (16) being arranged to be displaceable or deformable so that a working-fluid passage (15a, 15b) that allows communication between the two regions is opened; and
a threaded part (17, 27) having the piston rod part (12) passing therethrough, the threaded part (17, 27) including a male thread portion (171, 271) and a female thread portion (172) that are fitted with each other while being opposed to each other with respect to a radial direction of the piston rod part (12), the threaded part (17, 27) being arranged to extend or contract in the axial direction (X) of the piston rod part (12) as a result of rotation of the female thread portion (172) relative to the male thread portion (171, 271),
wherein the piston valve assembly (A1, A2) is arranged such that the piston part (15) and the valve element (16) do not move relative to the piston rod part (12) with respect to the axial direction (X) of the piston rod part (12) by a stretching force (F1,F3) that is generated between the pair of protruding members (13A, 13B) due to extension of the threaded part (17, 27).

2. The shock absorber according to claim 1, wherein
the threaded part (17, 27) is supported on the piston rod part (12) in a freely rotatable manner.

3. The shock absorber according to claim 1 or 2, wherein
the threaded part (17, 27) includes a first exposed portion (17b, 27p) and a second exposed portion (17g, 17h), the first exposed portion (17b, 27p) being integral with the male thread portion (171, 271) and exposed radially outside of the piston rod part (12), the second exposed portion (17g, 17h) being integral with the female thread portion (172) and exposed radially outside of the piston rod part (12).

4. The shock absorber according to any one of claims 1 to 3, wherein
the shock absorber includes a biasing element (14) that is arranged to apply a force to the piston valve assembly (A1, A2), the force traveling in a direction from the outside toward the inside of the space (S) between the pair of protruding members (13A, 13B) with respect to the axial direction (X) of the piston rod part (12),
a contact surface (17m) is provided at one end of the piston valve assembly (A1, A2) with respect to the axial direction (X) of the piston rod part (12), the contact surface (17m) being in contact with the biasing element (14),
the contact surface (17m) includes an accommodating recess (17n) that is concave in the direction from the outside toward the inside of the space (S) between the pair of protruding members (13A, 13B) with respect to the axial direction (X) of the piston rod part (12),
one of the pair of protruding members (13A, 13B) is at least partially accommodated in the accommodating recess (17n).

5. The shock absorber according to claim 4, wherein
the biasing element (14) is in contact with the contact surface (17m) but not in contact with the pair of protruding members (13A, 13B).

6. The shock absorber according to any one of claims 1 to 5, wherein
the piston valve assembly (A1, A2) is arranged such that the threaded part (17, 27) is extended to generate the stretching force (F1,F3) between the pair of protruding members (13A, 13B) under a state in which at least the male thread portion (171, 271) and the female thread portion (172) are positioned between the pair of protruding members (13A, 13B) with respect to the axial direction (X) of the piston rod part (12).

7. The shock absorber according to claim 6, wherein
the piston valve assembly (A1, A2) is arranged such that the threaded part (17, 27) is extended to generate the stretching force (F1,F3) between the pair of protruding members (13A, 13B) under a state in which at least the male thread portion (171, 271) and the female thread portion (172) are in contact with an outer circumferential surface of a portion of the piston rod part (12) located between the pair of protruding members (13A, 13B).

8. The shock absorber according to any one of claims 1 to 7, wherein
the piston part (15), the valve element (16), and the threaded part (17, 27) are separate members that are not fixed to one another, and are arranged between the pair of protruding members (13A, 13B) with respect to the axial direction (X) of the piston rod part (12),
the piston valve assembly (A1, A2) is arranged such that the piston part (15) and the valve element (16) do not move relative to the piston rod part (12) with respect to the axial direction (X) of the piston rod part (12) by the stretching force acting on the piston part (15), the valve element (16), and the threaded part (17, 27) due to extension of the threaded part (17, 27).

9. The shock absorber according to any one of claims 1 to 7, wherein
the piston part (15), the valve element (16), and the threaded part (17, 27) are separate members,
the piston part (15) and the valve element (16) are retained to the threaded part (17, 27) so as not to move with respect to the axial direction (X) of the piston rod part (12),
the piston valve assembly (A1, A2) is arranged such that the piston part (15) and the valve element (16) do not move relative to the piston rod part (12) with respect to the axial direction (X) of the piston rod part (12) by the stretching force (F1,F3) acting on the threaded part (17, 27) due to extension of the threaded part (17, 27).
